# EUROPEAN PATENT SPECIFICATION

(11) **EP 1 256 477 B1**
(45) Date of publication and mention of the grant of the patent: **20.10.2004**
(21) Application number: 02010102.8
(22) Date of filing: 07.05.2002
(51) Int. Cl.: B60K 20/04

(54) **Gear change control console for a motor vehicle, in particular for a commercial vehicle**
Gangwechsel-Steuerungskonsole für Kraftfahrzeug, insbesondere Nutzfahrzeug
Console de commande pour le changement de vitesse pour véhicule automobile, en particulier pour véhicule utilitaire

(30) Priority: 08.05.2001 IT TO20010437
(43) Date of publication of application: 13.11.2002
(73) Proprietor: IVECO S.p.A., 10156 Torino (IT)
(72) Inventor: Ropolo, Bruno, 14010 San Paolo Solbrito (IT)
(74) Representative: Gervasi, Gemma, Dr.

(56) References cited:
- EP-A- 0 695 664
- EP-A- 0 911 548
- EP-A- 1 028 021
- US-A- 5 409 080

## Description

The present invention relates to a gear change control console for a motor vehicle, in particular for a commercial vehicle, to which the following description will refer expressly but without implying any restriction thereto.

In the commercial vehicle sector, in particular lorries, there is a requirement to improvement the ergonomics for the driver and the comfort of the vehicles themselves. This is particularly important in the case of long journeys, in which the driver may feel the need to change driving position or, when parked, to move inside the driver's cab, for example to gain access to the zone adjoining the driving seat or to a sleeping area situated behind the cab itself.

The presence in the driver's cab of a gear change control console rigidly attached to the floor of the vehicle can present a restriction to movements of the driver's legs while driving and an obstacle to be climbed over when the driver is moving inside the cab.

Normally, the gear change control console is positioned to the right of the driving seat and divides the driving area from the adjacent area of the cab, which may accommodate another seat or may be used as a courtesy or rest zone provided with a small table or other similar elements. More precisely, the gear change control console is disposed beside the driving seat squab and in a slightly advanced position with respect thereto.

. Because of this position, to gain access to the area adjacent the driving seat or the sleeping area, the driver necessarily has to climb over the gear change control console or skirt around it, with evident discomfort.

The object of the present is to devise a gear change control console for a motor vehicle, in particular for a commercial vehicle, which makes it possible to improve the ergonomics for the driver and the comfort of the vehicle itself.

This object is achieved by the present invention in that it relates to a gear change control console for a motor vehicle, in particular for a commercial vehicle, according to claim 1.

US A 5 409 080 discloses in accordance with the features of the preamble of claim 1 a shiftable console adapted to more forward or backward, adapting to the position of an operator or that of the oparator's seat.

EP A 1 028 021 discloses a transmission shift system pivotally attached to a driver's seat.

With a view to a better understanding of the present invention a preferred embodiment will be described below by way of example and non-restrictively with reference to the accompanying drawings, in which:
Figure 1 is a partial view in perspective of the interior of a driver's cab of a commercial vehicle, including a gear change control console designed in accordance with the present invention;
Figure 2 is a view in side elevation and on an enlarged scale of the console in Figure 1;
Figure 3 is a plan view of the console in Figure 2, from which parts have been omitted for clarity;
Figure 4 is a section on an enlarged scale taken along the line IV-IV in Figure 2;
Figure 5 is a section on an enlarged scale taken along the line V-V in Figure 2; and
Figure 6 illustrates on an enlarged scale a detail of Figure 3.

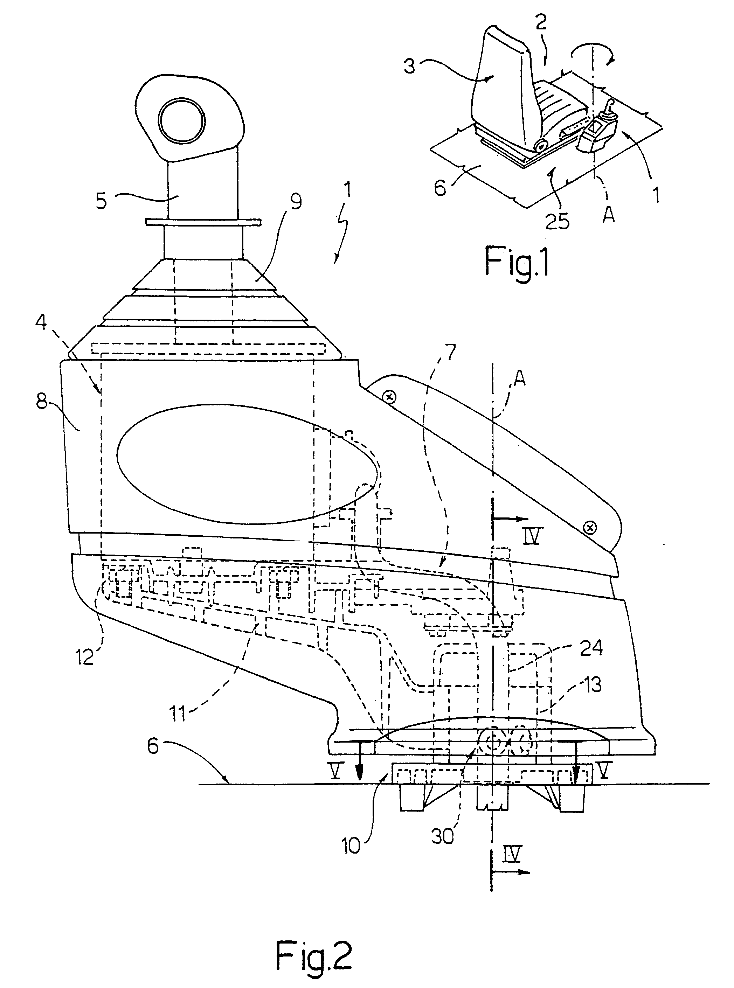

Referring to Figures 1,2 and 3, the reference numeral 1 generally denotes a gear change control console situated in the interior of a motor vehicle, in this case inside the driver's cab 2 of a commercial vehicle, on one side of a driving seat 3.

More precisely, the console 1 is situated beside the squab of the seat 3 and in a slightly advanced position with respect thereto.

The console 1 essentially comprises a gear selection unit 4, known per se, which generates control signals for a gearbox (not shown) in response to the manual actuation of a gear lever 5 mounted rotatably on the upper end of the unit 4.

The unit 4 is connected to the floor 6 of the cab 2 of the vehicle by means of a hinge-type connecting means 7 defining a vertical axis of rotation A, about which the entire console 1 can be rotated, as will be explained in greater detail below.

The unit 4 and the connecting means 7 are both housed inside a casing 8 which has an upper opening (not shown) through which passes with play the gear lever 5 so as to allow the free actuation of said lever 5. Said upper opening of the casing 8 is closed in a sealed manner by a bellows 9 surrounding the gear lever 5.

The connecting means 7 comprises a substantially C-shaped bracket 10 rigidly attached to the floor 6 of the cab 2, and a rotatable arm 11 having one end 12 securely connected to the unit 4 and an opposite end defining a bush 13 mounted in an axially fixed position and so as to rotate angularly about a pivot element 14 having an axis A and itself fixed to the bracket 10.

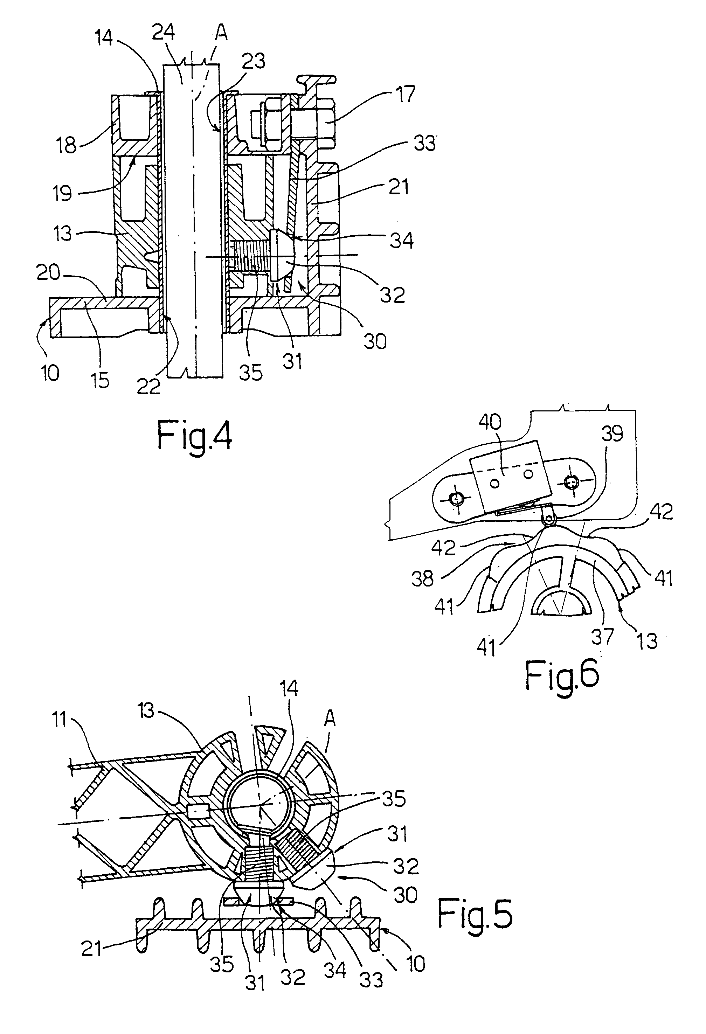

Referring particularly to Figure 4, the bracket 10 is formed by a substantially L-shaped attachment element 15 adapted to be rigidly connected to the floor 6, and by a flange 18 secured to the attachment element 15 by means of a pair of bolts 17 so as to define, with said attachment element 15, a seating 19 to receive the bush 13. In greater detail, the attachment element 15 comprises a horizontal base portion 20 securely connected to the floor 6, and a lateral portion 21 extending vertically so as to protrude from one side of the base portion 20.

The flange 18 is secured projecting by means of the bolts 17 to a free end of the lateral portion 21 of the attachment element 15 in a position parallel to the base portion 20.

As is clearly shown in Figure 4, the base portion 20 of the attachment element 15 and the flange 18 have respective through-holes 22,23 with an axis A, which are engaged in an axially and angularly fixed position by the pivot element 14.

The bush 13 is mounted in an angularly rotatable manner on the pivot element 14 and is locked axially in the seating 19 between the base portion 20 of the attachment element 15 and the flange 18.

The pivot element 14 extends vertically in a position spaced from the gear lever 5, is of tubular cylindrical shape and is traversed by a bundle of electric cables (not shown) enclosed in a sheath 24 and connected to the unit 4.

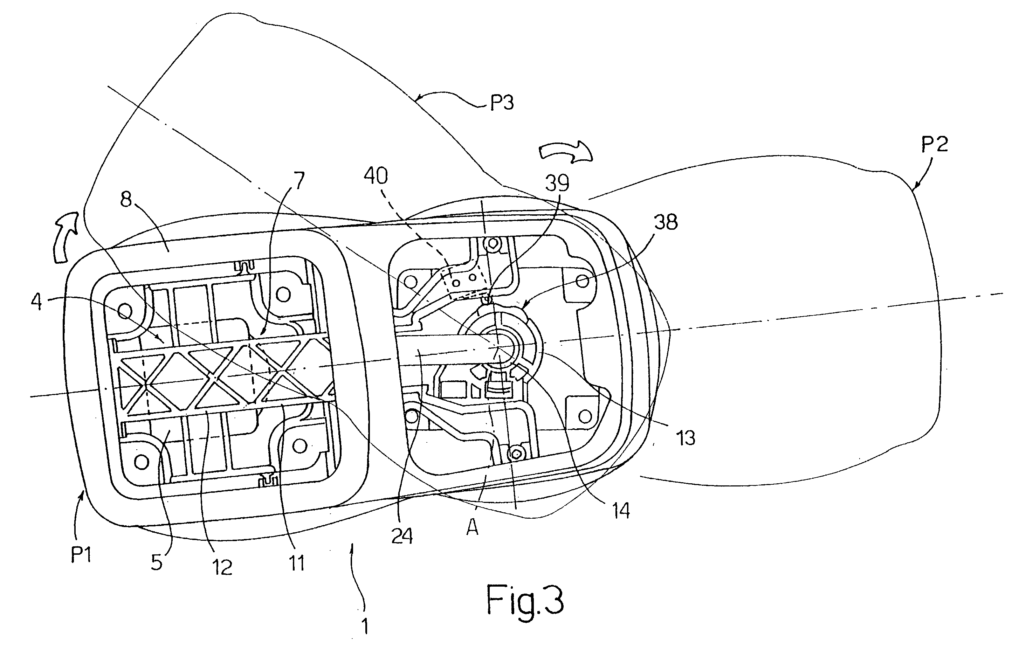

The console 1 can be rotated about the axis A through an angle of 180° starting from a normal driving position, indicated by P1 in Figure 3, in which the arm 11 is directed longitudinally forwards with reference to the direction of travel of the vehicle. In said normal driving position the front portion of the console 1 and the gear lever 5 impede the driver from moving from the driving seat 3 into the opposite lateral zone of the cab 2, indicated by 25 in Figure 1, which may accommodate another seat or may be used as a courtesy or rest zone provided with a small table or other similar elements.

When not in use, the console 1 can be rotated in an anticlockwise direction about the axis A into a withdrawn position, indicated by P2 in Figure 3, in which the arm 11 is turned through 180° in relation to the position P1 and does not impede the access of the driver to the zone 25 of the cab 2.

Advantageously, the console 1 comprises releasable snap-type coupling means 30 for rendering stable the position P1 and an alternative driving position indicated by P3 in Figure 3, interposed between the positions P1 and P2 and suitably disposed about 40° from said position P1.

The position P2 of the console 1 is preferably a non-stable position in which said console 1 cannot be operated.

The snap-type coupling means 30 essentially comprise a pair of pins 31 secured radially on the bush 13, spaced apart by 40o about the axis A and projecting outwardly from said bush 13 with respective heads 32, and a flat spring 33 secured to the bracket 10, which extends between the lateral portion 21 of the attachment element 15 and the bush 13, which is biased towards said bush 13 and has a through-hole 34 adapted to be selectively engaged by the heads 32 of the pins 31.

In particular, each pin 31 has threaded cylindrical shank 35 engaged between an associated threaded radial seating of the bush 13; the head 32 of each pin 31 projects radially with respect to the associated shank 35 is of substantially frustoconical shape with the larger section on the side of said shank 35.

The through-hole 34 provided in the flat spring 33 is of intermediate section between the smaller and larger sections of the heads 32 of the pins 31 and is adapted to be selectively engaged by a free end portion of said heads 32.

As is evident in Figure 4, the flat spring 33 is fixed, in alignment with an end portion thereof, between the flange 18 and the lateral portion 21 of the attachment element 15, and it defines, in alignment with an opposite end portion thereof, the engagement hole 34 for the heads 32 of the pins 31.

According to a preferred embodiment (Figure 6) the bush 13 has externally, in alignment with an angular portion 37 separate from the portion in which are provided the seats for the pins 31, a cam profile adapted to co-operate for sliding movement, when the console 1 is being rotated, with a cam follower 39 attached to a control lever of an alarm microswitch 40 for actuating said microswitch 40 in the event of said console 1 being disposed approximately in one of the positions P1 and P3.

In particular, the cam profile 38 of the angular portion 37 of the bush 13 is formed by three peaks 41 interposed between a pair of depressions 42 corresponding to respective angular engagement positions of the heads 32 of the pins 31 in the hole 34 of the flat spring 33. The remaining portion of the outer profile of the bush 13 is of cylindrical shape.

The microswitch 40 is connected into an alarm circuit (not shown) and is closed as a result of the interaction of the cam follower 39 with the peaks 41 of the cam profile 38, thus generating an alarm signal.

The advantages which can be achieved with the present invention are evident from a study of the features of the gear change control console 1 designed in accordance therewith.

In particular, complete rotation of the console 1 about the axis A from the position P1 into the position P2 allows the driver to move freely from the driving seat 3 into the adjacent lateral zone 25 or towards the rear area of the cab 2.

Moreover, the displacement of the console 1 from the position P1 into the position P3, which is itself stable and operative, enables the driver to have more space available for his/her legs while driving and, therefore, makes it possible to change driving position easily.

Finally, it is evident that the gear change control console 1 can be subject to modifications and variations without departing from the scope of protection of the present invention.

## Claims

1. A gear change control console (1) for a motor vehicle, in particular for a commercial vehicle, comprising a gear selection unit (4) and connecting means (7) for connecting said unit (4) to a floor (6) of said motor vehicle, wherein said connecting means (7) comprise hinge means (14, 11) defining a vertical axis of rotation (A) of the console with respect to said floor (6), and wherein said hinge means (14,11) comprise a pivot element (14) fixed vertically to said floor (6) and defining said axis (A), and an arm (11) carrying at a first end (12) said unit (4) and having an opposite second end (13) mounted so as to be able to rotate angularly about said pivot element (14), **characterised in that** said pivot element (14) is of tubular cylindrical shape, adapted to be traversed by a bundle of cables.

2. A console according to claim 1, **characterised in that** said hinge means (14,11) allow a rotation of 180° of said gear change control console (1) about said axis (A) between a normal driving position (P1) and a withdrawn position (P2) with respect to said normal driving position (P1) with reference to the direction of travel of said motor vehicle.

3. A console according to claim 1, **characterised in that** said connecting means (7) further comprise a bracket (10) rigidly connected to said floor (6) and carrying in a fixed position said pivot element (14).

4. A console according to claim 3, **characterised in that** said bracket (10) is C-shaped and defines a seat (19) through which passes said pivot element (14) and which receives said second end (13) of said arm (11).

5. A console according to any one of claims 2 to 4, **characterised in that** said connecting means (7) further comprise releasable retaining means (30) interposed between said hinge means (14,11) and said floor (6) so as to render stable said normal driving position (P1) and at least one alternative driving position (P3) interposed angularly between said normal driving position (P1) and said withdrawn position (P2).

6. A console according to claim 5, **characterised in that** said retaining means comprise snap-type coupling means (30).

7. A console according to claim 5 or 6, **characterised in that** said alternative driving position (P3) is angularly spaced from said normal driving position (P1) by an angle of approximately 40o about said axis (A).

8. A console according to any one of claims 5 to 7, **characterised in that** said retaining means (30) comprise a pair of engagement elements (31) projecting radially outwards from said second end (13) of said arm (11), and a flat spring (33) having an end portion attached to said floor (6) and an opposite end portion biased towards said second end (13) of said arm (11) so as to receive selectively in a seat (34) thereof said engagement elements (31).

9. A console according to any one of claims 5 to 8, **characterised in that** said second end (13) of said arm (11) has externally a cam profile (38) adapted to co-operate for sliding movement, when said console (1) is being rotated, with a cam follower (39) attached to a control lever of an alarm microswitch (40) for actuating said microswitch (40) in the event of said console (1) being disposed approximately in one of said normal and alternative driving positions (P1,P3).

## Patentansprüche

1. Gangwechsel-Steuerungskonsole (1) für ein Motorfahrzeug, insbesondere für ein Nutzfahrzeug, mit einer Gangwahleinheit (4) und Mitteln (7) zum Verbinden dieser Einheit (4) mit einem Fußboden (6) des Motorfahrzeugs, welche Verbindungsmittel (7) Scharniermittel (14, 11) aufweisen, die eine vertikale Drehachse (1) der Konsole bezüglich des Fußbodens (6) definieren und ein vertikal an dem Fußboden (6) angebrachtes Schwenkelement (14) aufweisen, das die Achse (A) definiert, und einen Arm (11), der an einem ersten Ende (12) die Einheit (4) trägt und an einem gegenüberliegenden, zweiten Ende (13) so angebracht ist, dass er sich winklig um das Schwenkelement (14) herum drehen kann, **dadurch gekennzeichnet, dass** das Schwenkelement (14) eine röhrenförmige zylindrische Gestalt hat, die von einem Kabelbündel durchquert werden kann.

2. Konsole nach Anspruch 1, **dadurch gekennzeichnet, dass** die Scharniermittel (14, 11) eine Drehung der Gangwechsel-Steuerungskonsole um 180° um die Achse (A) zwischen einer normalen Fahrposition (P1) und einer zurückgezogenen Position (P2) bezüglich der normalen Fahrposition (P1) mit Bezug auf die Fahrtrichtung des Motorfahrzeugs ermöglichen.

3. Konsole nach Anspruch 1, **dadurch gekennzeichnet, dass** die Verbindungsmittel (7) außerdem eine Halterung (10) aufweisen, die fest mit dem Fußboden (6) verbunden ist und das Schwenkelement (14) in einer befestigten Position trägt.

4. Konsole nach Anspruch 3, **dadurch gekennzeichnet, dass** die Halterung (10) C-förmig ist und einen Sitz (19) definiert, durch welchen das Schwenkelement (14) hindurch tritt und der das zweite Ende (13) des Armes (11) aufnimmt.

5. Konsole nach einem der Ansprüche 2 bis 4, **dadurch gekennzeichnet, dass** die Verbindungsmittel (7) außerdem lösbare Rückhaltemittel (30) aufweisen, die zwischen den Scharniermitteln (14, 11) und dem Fußboden (6) angeordnet sind, um die normale Fahrposition (P1) und zumindest eine alternative Fahrposition (P3), die winklig zwischen der normalen Fahrposition (P1) und der zurückgezogenen Position (P2) vorgesehen ist, stabil zu machen.

6. Konsole nach Anspruch 5, **dadurch gekennzeichnet, dass** die Rückhaltemittel Schnappverbindungsmittel (30) aufweisen.

7. Konsole nach Anspruch 5 order 6, **dadurch gekennzeichnet, dass** die alternative Fahrposition (P3) winklig von der normalen Fahrposition (P1) um einen Winkel von ungefähr 40° um die Achse (A) beabstandet ist.

8. Konsole nach einem der Ansprüche 5 bis 7, **dadurch gekennzeichnet, dass** die Rückhaltemittel (30) ein Paar von Eingriffselementen (31) aufweisen, die von dem zweiten Ende (13) des Arms (11) aus radial nach außen hervorstehen, und eine flache Feder (33) mit einem an dem Fußboden (6) angebrachten Endbereich und einem in Richtung des zweiten Endes (13) des Arms (11) so vorgespannten gegenüberliegenden Endbereich, dass die Eingriffselemente (31) selektiv in einem Sitz (34) dieser Feder (33) aufgenommen werden.

9. Konsole nach einem der Ansprüche 5 bis 8, **dadurch gekennzeichnet, dass** das zweite Ende (13) des Armes (11) außen ein Nockenprofil (38) hat, das, wenn die Konsole (1) gedreht wird, für eine Gleitbewegung mit einem Nockenstößel (39) zusammenwirken kann, der an einem Steuerhebel eines Alarm-Mikroschalters (40) angebracht ist, um diesen Mikroschalter (40) zu betätigen, falls die Konsole (1) sich annähernd in der normalen oder der alternative Fahrposition (P1, P3) befindet.

## Revendications

1. Console de commande de changement de vitesse (1) pour un véhicule automobile, en particulier pour un véhicule utilitaire, comprenant une unité de sélection de vitesse (4) et des moyens de connexion (7) pour connecter ladite unité (4) à un plancher (6) dudit véhicule automobile, où lesdits moyens de connexion (7) comprennent des moyens d'articulation (14, 11) définissant un axe de rotation vertical (A) de la console par rapport audit plancher (6), et où lesdits moyens d'articulation (14, 11) comprennent un élément pivotant (14) fixé verticalement audit plancher (6) et définissant ledit axe (A), et un bras (11) portant à une première extrémité (12) ladite unité (4) et ayant une seconde extrémité opposée (13) installée de façon à pouvoir tourner angulairement autour dudit élément de pivotement (14), **caractérisée en ce que** ledit élément de pivotement (14) est d'une forme cylindrique tubulaire, apte à être traversé par un faisceau de câbles.

2. Console selon la revendication 1, **caractérisée en ce que** lesdits moyens d'articulation (14, 11) permettent une rotation de 180° de ladite console de commande (1) pour le changement de vitesse autour dudit axe (A) entre une position de conduite normale (P1) et une position en retrait (P2) par rapport à ladite position de conduite normale (P1) par rapport à la direction de déplacement dudit véhicule automobile.

3. Console selon la revendication 1, **caractérisée en ce que** lesdits moyens de connexion (7) comprennent en outre un support (10) connecté rigidement audit plancher (6) et supportant dans une position fixe ledit élément de pivotement (14).

4. Console selon la revendication 3, **caractérisée en ce que** ledit support (10) est en forme de C et définit un siège (19) à travers lequel passe ledit élément de pivotement (14) et qui reçoit ladite seconde extrémité (13) dudit bras (11).

5. Console selon l'une des revendications 2 à 4, **caractérisée en ce que** lesdits moyens de connexion (7) comprennent en outre des moyens de retenue relâchables (30) interposés entre lesdits moyens d'articulation (14, 11) et ledit plancher (6) de manière à rendre stable ladite position de conduite normale (P1) et au moins une position de conduite alternative (P3) interposée angulairement entre ladite position de conduite normale (P1) et ladite position en retrait (P2).

6. Console selon la revendication 5, **caractérisée en ce que** lesdits moyens de retenue comprennent des moyens de couplage (30) du type à encliquetage.

7. Console selon la revendication 5 ou 6, **caractérisée en ce que** ladite position de conduite alternative (P3) est espacée angulairement de ladite position de conduite normale (P1) selon un angle d'approximativement 40° autour dudit axe (A).

8. Console selon l'une des revendications 5 à 7, **caractérisée en ce que** lesdits moyens de retenue (30) comprennent une paire d'éléments d'engagement (31) faisant saillie radialement vers l'extérieur à partir de ladite seconde extrémité (13) dudit bras (11), et un ressort plat (33) ayant une portion d'extrémité fixée audit plancher (6) et une portion d'extrémité opposée sollicitée vers ladite seconde extrémité (13) dudit bras (11) de manière à recevoir sélectivement dans un siège (34) de celui-ci lesdits éléments d'engagement (31).

9. Console selon l'une des revendications 5 à 8, **caractérisée en ce que** ladite seconde extrémité (13) dudit bras (11) présente extérieurement un profil de came (38) conçu pour coopérer en vue d'un mouvement de coulissement lorsque ladite console (1) est entraînée en rotation, avec un suiveur de came (39) fixé à un levier de commande d'un microcommutateur d'alarme (40) pour actionner ledit microcommutateur (40) dans le cas où ladite console (1) est disposée approximativement dans l'une desdites positions de conduite normale et alternative (P1, P3).
